# EUROPEAN PATENT APPLICATION

(11) **EP 2 333 327 A1**
(43) Date of publication of application: **15.06.2011**
(21) Application number: 08877274.4
(22) Date of filing: 09.10.2008
(51) Int. Cl.: F03D 11/00

(54) **OFFSHORE WIND-DRIVEN ELECTRIC POWER GENERATOR AND OFFSHORE WIND FARM**

(71) Applicant: Mitsubishi Heavy Industries, Ltd., Tokyo 108-8215 (JP)
(72) Inventor: YONEDA, Jiro, Nagasaki-shi Nagasaki 851-0392 (JP); SATO, Toshihiro, Nagasaki-shi Nagasaki 851-0392 (JP); IMAI, Tetsuya, Nagasaki-shi Nagasaki 851-0392 (JP)
(74) Representative: Intès, Didier Gérard André
(86) International application number: PCT/JP2008/068396
(87) International publication number: WO 2010/041326

(57) **Abstract**

An object is to provide an off-shore wind turbine generator capable of obtaining accurate information about the situation of a wind turbine itself, surrounding weather conditions, and the like. The off-shore wind turbine generator of the present invention generates power by driving a generator mechanism through the rotation of a rotor head to which wind turbine blades are attached and includes a monitoring apparatus (10) for monitoring the wind turbine generator itself and its surrounding circumstances.

## Description

### Technical Field

The present invention relates to a wind turbine generator that generates power using a wind turbine converting natural energy of the wind into a rotative force and, in particular, to an off-shore wind turbine generator and an off-shore wind farm installed off shore or on shore.

### Background Art

A wind turbine generator that generates power using natural energy of wind power has been conventionally known. In this type of wind turbine generator, a nacelle disposed on a support column is provided with a rotor head to which wind turbine blades are attached, a main shaft coupled so as to rotate together with the rotor head, a gearbox coupled to the main shaft rotating the wind turbine blades deceive wind power, and a generator driven by shaft output power of the gearbox. In the thus-configured wind turbine generator, the rotor head, which has wind turbine converting wind power into a rotative force, and the main shaft rotate to produce shaft output power, and the shaft output power whose rotational speed has been increased via the gearbox coupled to the main shaft is transferred to the generator. Thus, power generation can be performed in which the shaft output powder obtained by converting wind power into a rotative force is used as a derive source of the generator, and wind power is used to power the generator.
Note that a plant in which a plurality of wind turbine generators are installed is called a wind farm.

It is expected that such wind turbine generators will be increasingly installed off shore or on shore in the future. A conventional wind turbine generator installed off shore (off-shore wind turbine generator) has only a function of observing the wind direction and the wind speed, in addition to the power generator function achieved by the wind turbine.
On the other hand, as a system for monitoring or searching for an object floating, drifting, or sailing on the ocean, a system for searching for a rescuer using a monitoring apparatus, such as a laser radar, while processing positioning received from a GPS (global Positioning System) navigation satellite conforming the position of a rescue ship and sailing record thereof has disclosed (for example, see Patent Citation 1).

### Patent Citation 1:

Japanese Unexamined Patent Application, Publication No. 2007-1517

### Disclosure of Invention

Since the above-described conventional off-shore wind turbine generator has only the function of observing the wind direction and the wind speed, it is difficult to monitor the main body of the wind turbine itself. In particular, because an off-shore wind turbine generator or an off-shore wind farm is installed at the edge of the country in many cases, it is difficult to continuously monitor the situation of (damage to) the main body of the wind turbine itself because of the conditions of the installation site.
On the other hand, rainfall observation around the off-shore wind turbine generator using a weather radar is difficult because there is no appropriate off-shore place to securely install the weather radar. Thus, at present, observation data obtained by a radar installed on the ground is used instead, but it is desirable to make an operational plan or execute operational control for the off-shore wind turbine generator based on the actual, most accurate weather data on site.
Furthermore, in many cases, the installation site of the off-shore wind turbine generator is located in an area where there are not many people, and it is difficult to find a ship in distress or the like in such an area.

In light of this background, in an off-shore wind turbine generator or an off-shore wind farm, it is desirable that accurate information about the situation of the wind turbine itself, surrounding weather conditions, and the like be obtained and reflected in an operational plan etc. for the wind turbine generator.
The present invention has been made in view of the above-described circumstances, and an object thereof is to provide an off-shore wind turbine generator and an off-shore wind farm capable of obtaining accurate information about the situation of the wind turbine itself, surrounding weather conditions, and the like.

In order to solve the above-described problems, the present invention employs the following solutions.
According to the present invention, there is provided an off-shore wind turbine generator that generates power by driving a generator mechanism through rotation of a rotor head to which wind turbine blades are attached, off-shore wind turbine generator including monitoring means for monitoring the wind turbine generator itself and the surrounding circumstances.

According to this off-shore wind turbine generator, because the monitoring means for monitoring the wind turbine generator itself and its surrounding circumstances is included, accurate information; about the situation of the wind turbine itself, surrounding weather conditions, and the like can be obtained. Information obtained by the monitoring means is sent to a control room located at an appropriate place near the off-shore wind turbine generator and used.

In the off-shore wind turbine generator of the present invention, it is preferable that the monitoring means include at least one of a radar, a laser radar, and a camera. It is preferable that monitoring means having a wide monitoring range be used as a continuous monitoring device during usual monitoring, and monitoring means having a narrow monitoring range be selectively used depending on the situation.
In this case, the radar can monitor a range of several kilometers to several tens of kilometers, and a marine radar or a weather radar may be employed.
Further, the laser radar can monitor a range up to several kilometers, and a marine radar may be employed.
Furthermore, the camera can monitor a range up to several hundred meters, and a visible-light camera or an infrared camera be employed.

In the off-shore wind turbine generator of the present invention, it is preferable to further include movable means for allowing the monitoring means to monitor an area of 360 degrees. Thus, wide-range monitoring can be efficiently performed by the smallest number of monitoring means.

In the off-shore wind turbine generator of the present invention, it is preferable that the radar, the laser radar, and the camera, which serve as the monitoring means, be installed outside a noise occurrence area where noise is produced by the rotation of the wind turbine blades. Preferable specific examples of a position outside the noise occurrence area include a position that is located on the top of a supporting member provided on the upper surface of a nacelle and that is higher than the wind turbine blades, a position that is located on a support column of the wind turbine generator and that is lower than the wind turbine blades, and a position that is located on a horizontal shaft protruding from a rotor head end portion or a nacelle end portion.

In the off-shore wind turbine generator of the present invention, it is preferable that the radar, the laser radar, and the camera, which serve as the monitoring means, be installed on a nacelle, and noise removal for removing the noise produced by the rotation of the wind turbine blades be further provided. Thus, modification of the structure of the wind turbine is unnecessary, and accurate radar observation can be performed.

In the off-shore wind turbine generator of the present invention, it is preferable to further include alarm/warning means for the surroundings. Thus, an alarm or warning can be swiftly issued in an abnormal situation.
In this case, examples of preferable alarm/warning means include audio means, such as a speaker or a siren, and visual means, such as a warning light. When a whistle that sounds due to the rotation of the wind turbine blades is provided at an appropriate place on the wind turbine blades, and an airflow path thereof is opened or closed as needed, the whistle can be alarm/warning means that does not require power other than that for the opening/closing operation.

According to the present invention, there is provided an off-shore wind farm including a plurality of off-shore wind turbine generator having a mixture of an off-shore wind turbine generator according to any of the above-described off-shore wind turbine generators of the present invention and an ordinary off-shore wind turbine generator that does not have the monitoring means, in which the ordinary off-shore wind turbine generator is disposed in a monitorable area of the off-shore wind turbine generator.

According to this off-shore wind farm, the ordinary off-shore wind turbine generator is arranged in the monitorable area of the off-shore wind turbine generator; thus, the number of monitoring means can be reduced.

In the off-shore wind farm of the present invention, it is preferable that the ordinary off-shore wind turbine generator be disposed at a position where a plurality of the off-shore wind turbine generators can monitor the ordinary off-shore wind turbine generator. Thus, the monitoring reliability and the accuracy of monitoring information can be improved.

According to the above-described present invention, in the off-shore wind turbine generator or the off-shore wind farm, accurate information about the situation of the wind turbine itself, surrounding weather conditions, and the like can be obtained reflected in an operational plan etc. for the wind turbine generator. Furthermore, in the off-shore wind farm, mutual monitoring between adjacent off-shore wind turbine generators can be performed.
Since the monitoring means is fixedly installed off shore, the accuracy of sea monitoring using the radar or the like can be improved, and it can also be used to search for a ship in distress or the like.

### Brief Description of Drawings

[FIG. 1] FIG. 1 is a block diagram showing an example configuration of a monitoring apparatus installed in an off-shore wind turbine generator according to a first embodiment of the present invention.
[FIG. 2] FIG. 2 is a view showing, in outline, the configuration of the off-shore wind turbine generator.
[FIG. 3] FIG. 3 is a view showing a radar installation example.
[FIG. 4] FIG. 4 is a view showing a first modification of the radar installation example.
[FIG. 5] FIG. 5 is a view showing a second modification of the radar installation example.
[FIG. 6A] FIG. 6A is a view showing a laser radar installation example.
[FIG. 6B] FIG. 6B is a view showing a camera installation example.
[FIG. 7A] FIG. 7A is a view showing a modification of the laser installation example.
[FIG. 7B] FIG. 7B is a view showing a modification of the camera installation example.
[FIG. 8A] FIG. 8A is a view showing an example arrangement (alternate arrangement) in an off-shore wind farm according to a second embodiment of the present invention.
[FIG. 8B] FIG. 8B is a view showing an example arrangement (zigzag arrangement) in an off-shore wind farm according to the second embodiment of the present invention.
[FIG. 9] FIG. 9 is a view showing an example configuration in which a whistle is employed as alarm/warning means.
[FIG. 10] FIG. 10 is a view showing an example configuration in which an audio alarm apparatus is employed as the alarm/warning means.
[FIG. 11] FIG. 11 is a view showing an example configuration in which a visual alarm apparatus is employed as the alarm/warning means.

### Explanation of Reference:

1: off-shore wind turbine generator
2: support column
3: nacelle
4: rotor head
5: wind turbine blades
10: monitoring apparatus
11: radar
12: laser radar
13: camera
50, 50A: off-shore wind farm
51: wind turbines with installed monitoring apparatus (monitoring wind turbines)
52: usual wind turbines (ordinary wind turbines)
60: whistle
61: audio alarm apparatus
62: visual alarm apparatus

### Best Mode for Carrying Out the Invention

An off-shore wind turbine generator and an off-shore wind farm according to one embodiment of the present invention will be described below with reference to the drawings.

### First Embodiment

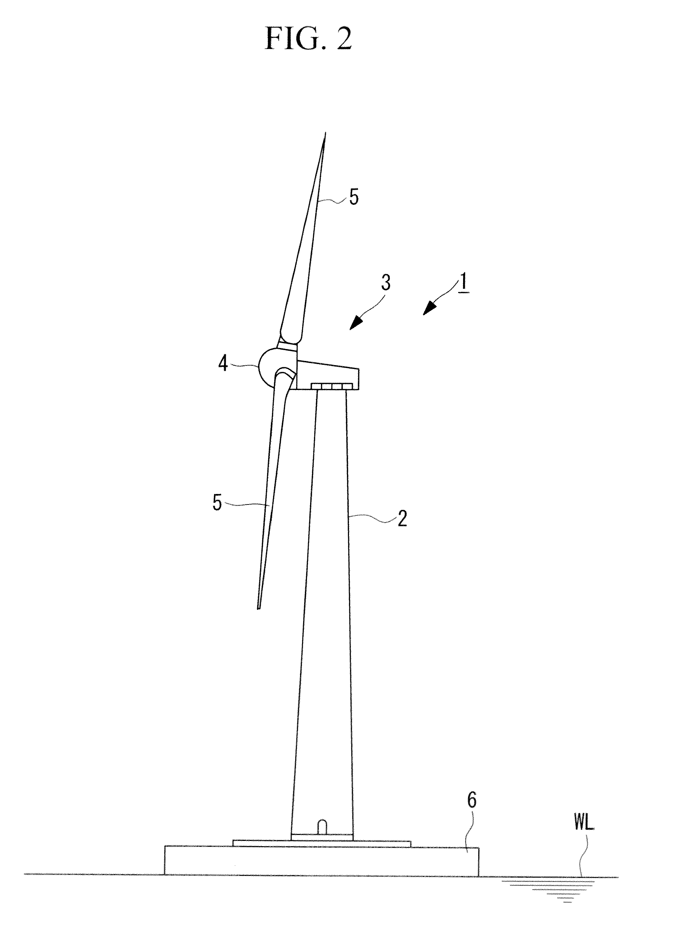

As shown in FIG. 2, for example, an off-shore wind turbine generator (hereinafter, referred to as "power-generating facility") 1 installed off shore or on shore includes a support column 2 provided upright on an off-shore foundation 6, a nacelle 3 disposed on the top of the support column 2, and a rotor head 4 provided on the nacelle 3 so as to be capable of rotating about a substantially horizontal axis. The support column 2 is provided upright on a floating body instead of the off-shore foundation 6 in some cases.
A plurality of wind turbine blades 5 are attached to the rotor head 4 in a radiating pattern around the rotational axis thereof. As a result, the force of wind striking the wind turbine blades 5 from the rotational-axis direction of the rotor head 4 is converted into a force causing the rotor head 4 to rotate about the rotational axis.

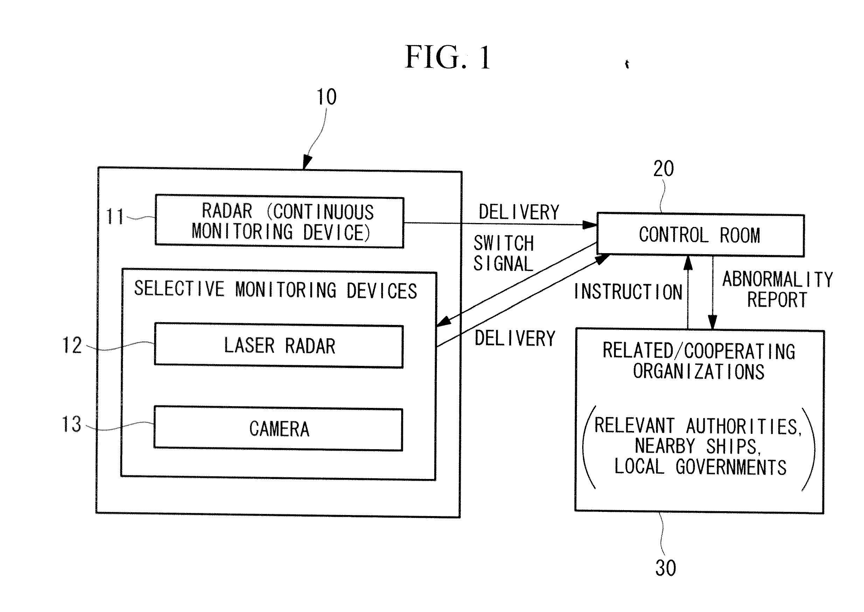

The power-generating facility 1 is provided with a monitoring apparatus 10, shown in FIG. 1, for example, as monitoring means for monitoring the wind turbine generator itself and its surrounding circumstances. Power required for the monitoring apparatus 10 just needs to be supplied from the power-generating facility 1.
The monitoring apparatus 10 includes three types of devices, namely, a radar 11, a laser radar 12, and a camera 13. In this case, the radar 11 having the widest monitoring range is used as a continuous monitoring device that continuously monitors the surroundings, and the laser radar 12 and the camera 13 are used as selective monitoring devices that are selectively used when needed.

Monitoring information obtained by the monitoring apparatus 10 is sent, for example, to a control room 20 that is provided on the land or the like close to installation site of power-generating facility 1. During usual monitoring, monitoring information obtained when only the radar 11 is operated is delivered to the control room 20. However, in a case where an abnormality is recognized in the monitoring information obtained by the radar 11 or in a case where an abnormal signal is output from the power-generating facility 1, a switch signal is output as needed from the control room 20 to select and switch to monitoring executed by the laser radar 12 or the camera 13, serving as the selective monitoring device. As a result, the selected one of the laser radar 12 and the camera 13 is operated and delivers monitoring information to the control room 20.

Based on the monitoring information delivered from the monitoring apparatus 10, the control room 20 executes operational control and an operational plan for the power-generating facility 1, reports, as needed, an abnormality to related/cooperating organizations 30, and then receives instructions therefrom. Specific examples of the related/cooperating organizations 30 include relevant authorities for the ocean area around the installation site of the power-generating facility 1, nearby ships, and neighboring local governments.
The monitoring apparatus 10 executes monitoring for 24 consecutive hours, and monitoring information thereof is delivered to the control room 20 and is recorded therein.

The three types of devices constituting the above-described monitoring apparatus 10 will be specifically described here.
The radar 11 is used as the continuous monitoring, device for executing usual monitoring and has the widest monitoring range (several kilometers to several tens of kilometers) among the three types of devices. As the radar 11, a marine radar or a weather radar can be used, for example. Of those radars, the marine radar is suitable for searching for and monitoring by a ship, such as a rescue ship, and the weather radar is suitable for local weather observation in an ocean area around the installation site of the power-generating facility 1. Although the weather radar has an observation range narrower than a general weather radar installed on the land, it can accurately observe local precipitation etc. for torrential rain in the surrounding ocean area by setting the resolution higher.

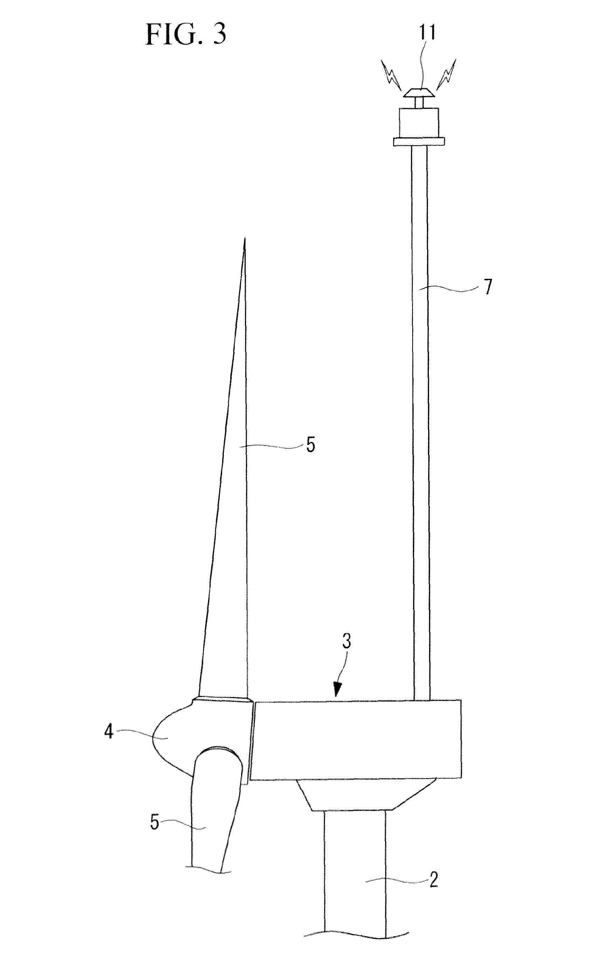

As shown in FIG. 3, for example, the radar 11 is preferable installed on the top of a supporting member 7 that extends upward from an upper surface of the nacelle 3. This installation position is set at least higher than the position of an uppermost of the wind turbine blades 5 in order that electromagnetic waves radiated from the radar 11 may not be influenced by the rotating wind turbine blades 5. Specifically, the installation position of the radar 11 is set at the outside of an area where noise of electromagnetic waves reflected on the rotating wind turbine blades 5 is produced (outside of a noise occurrence areal).

Further, the radar 11 has movable means provided to allow a range of 360 degrees to be monitored around the power-generating facility 1. Therefore, the radar 11 can monitor as wide as 360 degrees around the power-generating facility 1.
When the radar 11 is installed at a position lower than the position of a lowermost end of the rotating wind turbine blades 5, it is also outside the noise occurrence area; but the radar 11 is desirably installed at the highest possible position when wide-range monitoring is taken into account.

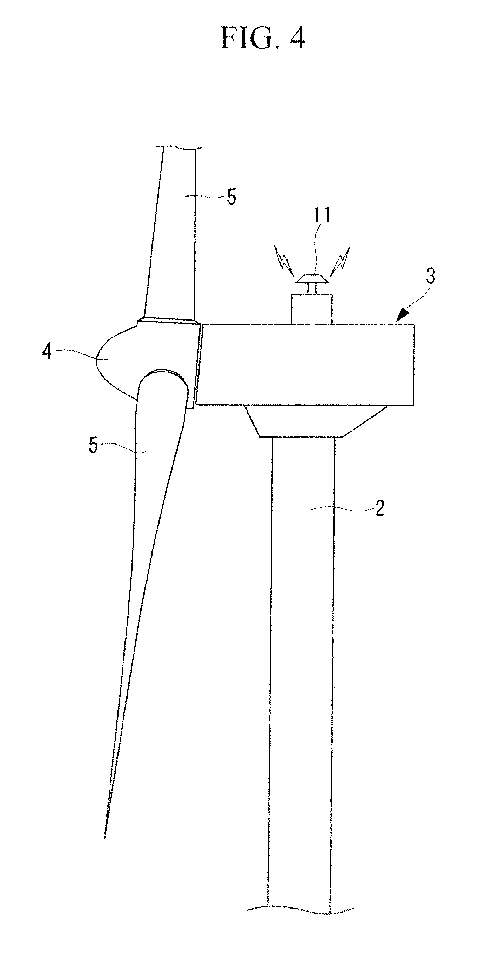

Next, an installation position of the radar 11 according to a first modification will be described with reference to FIG. 4. Identical reference numerals are assigned to the same portions as those in the above-described embodiment, and a detailed description thereof will be omitted.
In this modification, the radar 11 is installed on the upper surface of the nacelle 3. Since this installation position is located in an area where noise is produced by The rotation of the wind turbine blades 5, noise removal means that removes noise from the periodicity of the wind turbine blades 5 is provided in the radar 11.
This installation structure of the radar 11 is advantageous in terms of cost because a change in the structure of the power-generating facility 1, such as attaching the above-described supporting member 7 thereto, is not necessary. Further, since noise produced by the rotation of the wind turbine blades 5 is removed by the noise removal means, accurate radar observation can be performed.

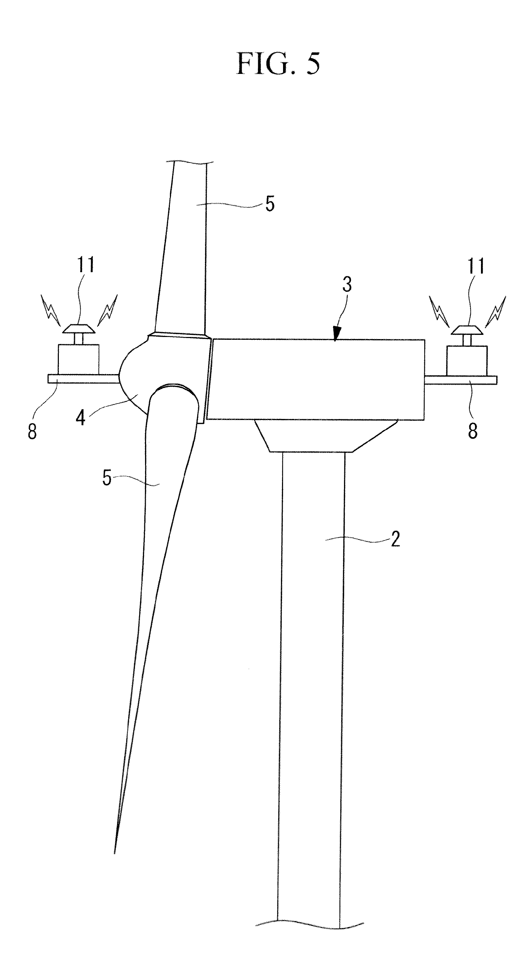

Next, installation positions of radars 11 according to a second modification will be described with reference to FIG. 5. Identical reference numerals are assigned to the same portions as those in the above-described embodiment, and a detailed description thereof will be omitted.
In this modification, the radars 11 are attached, one each, on a horizontal shaft 8 protruding from a front end face of the rotor head 4 and on a horizontal shaft 8 protruding from a rear end face of the nacelle 3. The horizontal shafts 8 are fixed shafts independent of the rotation of the wind turbine blades 5 the rotor head 4. Specifically, the radars 11 secured to the horizontal shafts 8 do not rotate together with the wind turbine blades 5 and can monitor their surroundings while keeping the positions.

With this installation, the radar 11 that is installed at a front end portion of the rotor head 4 can monitor forward without being influenced by the wind turbine blades 5 rotating at the back, and the radar 11 that is installed at a rear end portion of the nacelle 3 can monitor backward without being influenced by the wind turbine blades 5 rotating at the front. Therefore, the pair of radars 11 can monitor a wide range around the power-generating facility 1.
In the off-shore wind farm, to be described later, the radar 11 can also be installed on only one of the front end face of the rotor head 4 and the rear end face of the nacelle 3. In that case, when the power-generating facilities 1 are arranged in a zigzag manner, a wide view can be secured for the wind farm as a whole.

Next, the laser radar 12 is a device installed for selective monitoring and has an intermediate monitoring range (up to approximately several kilometers) among the three types of devices. It is preferable that a marine radar be used as the laser radar 12 because the laser radar 12 is used for ocean monitoring. The laser radar 12 usually monitors another adjacent or close wind turbine generator 1 in the off-shore wind farm to visually see whether it has been damaged. Further, if a search for a ship in distress or the like is needed, monitoring searching for the monitoring object can be performed through a manual operation from the control room 20.

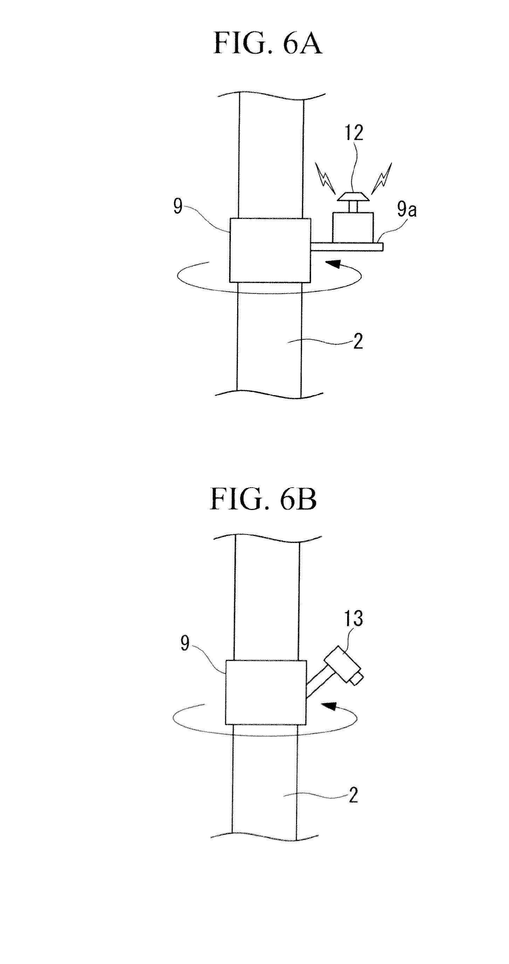

The above-described laser radar 12 is preferable installed outside the noise occurrence area, similarly to the radar 11. Since the laser radar 12 has a high directivity and has a monitorable distance that is not as long as that of the radar 11, as shown in FIG. 6A, for example, it is installed on the support column 2 at a position lower than the position of the lowermost end of the wind turbine blades 5. This installation position has an advantage in that the flow of air is less affected because the installation position is away from the field of the rotation of the wind turbine blades 5.

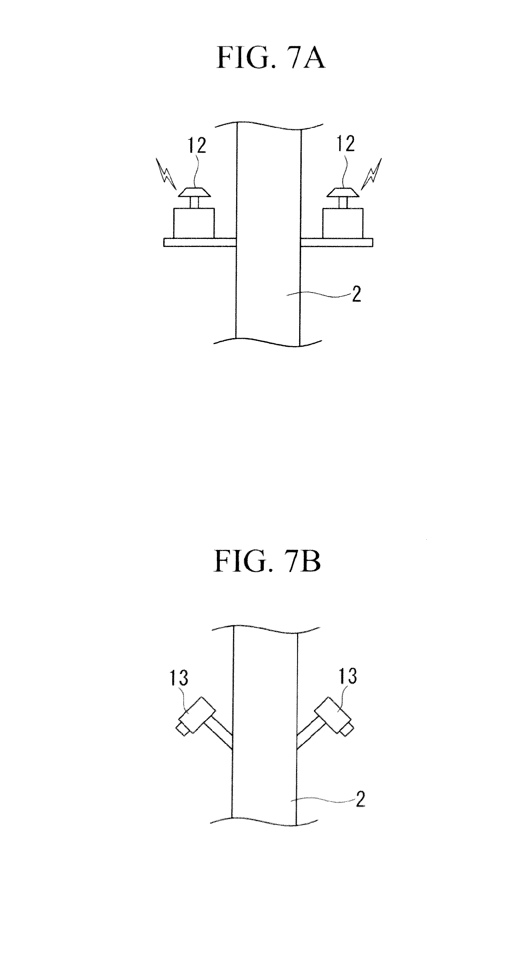

In this case, the laser radar 12 is installed on an installation platform 9a of a movable mechanism 9 that revolves around the support column 2, and thus the monitoring direction can be freely changed as needed. The movable mechanism 9 used for the laser radar 12 may be shared with the above-described radar 11 and the camera 13, to be described later, and above-described radar 11 and the camera 13 may also be installed in line on the installation platform 9a. This allows a redaction in cost.
Furthermore, as shown in FIG. 7A, a plurality of laser radars 12 may be fixedly installed on the support column 2 at a position Jower than the position of the lowermost end of the wind turbine blades 5 so as to ensure a wide monitoring range around the power-generating facility 1.

Next, the camera 13 is a device installed for selective monitoring and has the narrowest monitoring range (up to approximately several hundred meters) among the three types of devices. A visible-light camera, an infrared camera, or the like can be used as the camera 13. The camera 13 usually monitors another adjacent or close wind turbine generator 1 in the off-shore wind farm, similarly to the laser radar 12, and can visually monitor it and determine from a clearer image whether it has been damaged. Further, if a search for a ship in distress or the like is needed, monitoring and searching for the monitoring object can be performed through a manual operation from the control room 20.

The installation position of the camera 13 is not particularly restricted, but it is preferably installed at the same position as the laser radar 12, for example. Specifically, as shown in FIG. 6B, the camera 13 may be installed on the movable mechanism 9 provided on the support column 2 at a position lower than the position of the lowermost end of the wind turbine blade 5, to allow the monitoring direction to be changed as needed.
Furthermore, as shown in FIG. 7B, a plurality of cameras 13 may be fixedly installed on the support column 2 at a position lower than the position of the lowermost end of the wind turbine blades 5 so as to ensure a wide monitoring range around the power-generating facility 1.

according to this power-generating facility 1, the monitoring apparatus 10 for monitoring the power-generating facility itself and its surrounding circumstances is included; thus, accurate information about the situation of the wind turbine itself, surrounding weather conditions, and the like can be obtained. The information obtained by the monitoring apparatus 10 is sent to the control room 20 located at an appropriate place near the power-generating facility 1 and used. Then, when an abnormality is reported to the related/cooperating organizations 30 as needed, appropriate instructions can be obtained to take prompt action.

In the above-described embodiment, the monitoring apparatus 10 includes all of the radar 11, the laser radar 12, and the camera 13; however, the number of devices to be included can be appropriately changed depending on carious conditions, such as the intended purpose or installation environment, and just one or more devices among the above-described three types of devices needs to be included. If a plurality of devices are included, it is preferable that a device having a wide monitoring range be used as a continuous monitoring device during usual monitoring, and monitoring means having a narrow monitoring range be selectively used depending on the situation.
Further, it is desired that movable means, such as the movable mechanism 9, be provided for each of the devices constituting the monitoring apparatus 10 so as to ensure the widest possible monitorable area, preferably, a 360-degree monitorable area.

### Second Embodiment

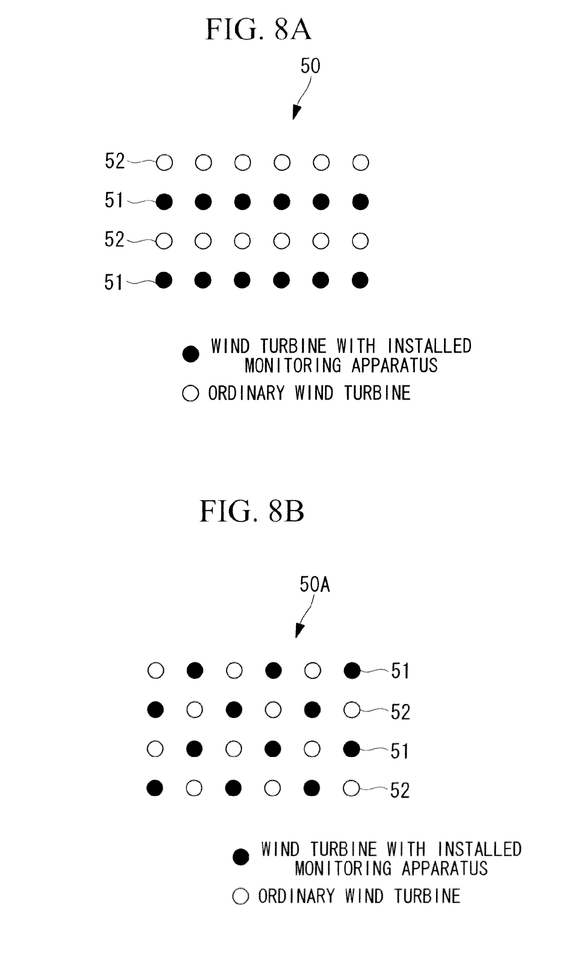

Next, off-shore wind farms according to a second embodiment of the present invention will be described based on FIGS. 8A and 8B, each of the off-shore wind farms being configured by installing a plurality of the off-shore wind turbine generators 1 described above.
Off-shore wind farms 50 and 50A shown in FIGS. 8A and FIG. 8B, respectively, each include wind turbines 51 with installed monitoring apparatuses (hereinafter, referred to as "monitoring wind turbine") indicated by black circles in the figures and usual wind turbines (hereinafter, referred to as "ordinary wind turbines") 52 indicated by white circles in the figures. The monitoring wind turbines 51 are off-shore wind turbine generators 1 each having the monitoring apparatus 10, described above in the first embodiment, and the ordinary wind turbines 52 are not provided with the monitoring apparatus 10.

In the off-shore wind farm 50 composed of the monitoring wind turbines 51 and the ordinary wind turbines 52, the ordinary wind turbines 52 are arranged in the monitorable areas of the monitoring wind turbines 51.
In an example arrangement in the wind farm 50 shown in FIG. 8A, the monitoring wind turbines 51 and the ordinary wind turbines 52 are aligned horizontally in respective lines, and the lines of the monitoring wind turbines 51 and the lines of the ordinary wind turbines 52 are alternately disposed in the vertical direction. Specifically, since the ordinary wind turbines 52 are disposed in the monitoring areas formed around the monitoring wind turbines 51, the number of monitoring apparatuses 10 required for the off-shore wind farm 50 can be reduced to allow cost reduction, while maintaining the necessary monitoring capability.

In an example arrangement in the wind farm 50A shown in FIG. 8B, the monitoring wind turbines 51 and the ordinary wind turbines 52 are arranged in a zigzag pattern. Thus, at least two monitoring wind turbines 51 are arranged around each of the ordinary wind turbines 52, and therefore, the monitoring reliability and the accuracy of monitoring information can be improved.

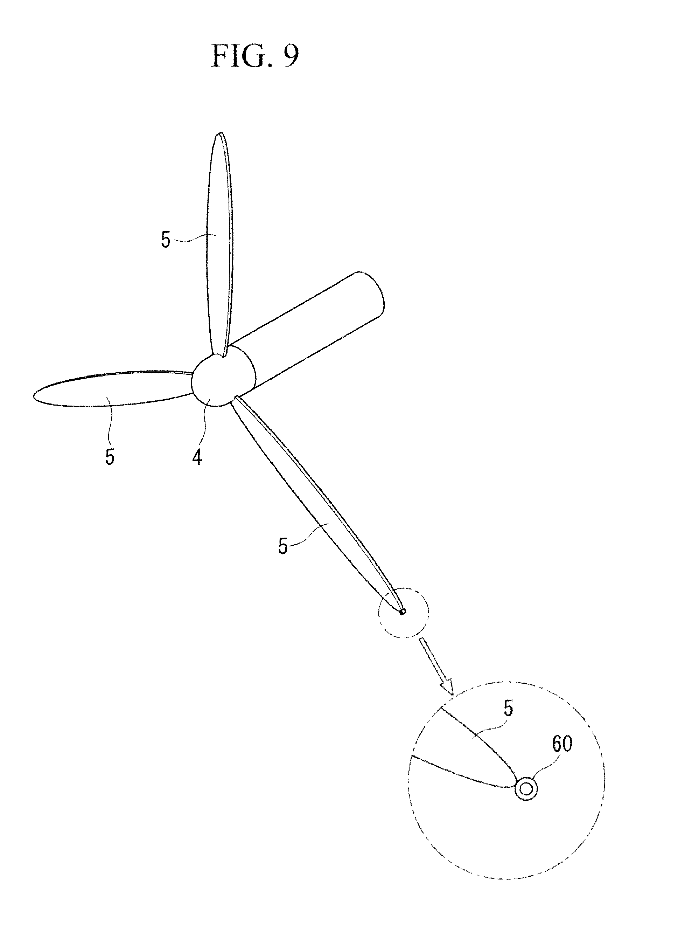

In the above-described embodiment, it is preferred that the power-generating facilities 1 include alarm/warning means for the surroundings. Specific examples of the alarm/warning means will be described below with reference to the drawings. In the off-shore wind farm, the alarm/warning means just needs to be provided in the whole farm.
In alarm/warning means shown in FIG. 9, a whistle 60 that sounds due to the rotation of the wind turbine blades 5 is provided at an appropriate place on the wind turbine blades 5, such as the tip of one of the wind turbine blade 5, and an on-off valve (not shown) for opening or closing, as needed, a hole serving as an airflow path of the whistle 60 is attached thereto. The whistle 60 sounds using airflow produced by the rotation of the wind turbine blades 5 and can swiftly issue an alarm/warning for announcing an abnormality by opening the hole of the airflow path automatically or remotely according to a predetermined condition for abnormality detection. Witch this configuration, the alarm/warning means does not require power other than that for opening or closing the on-off valve. When the airflow path is closed during a normal situation, the alarm/warning means does not function as whistle 60.

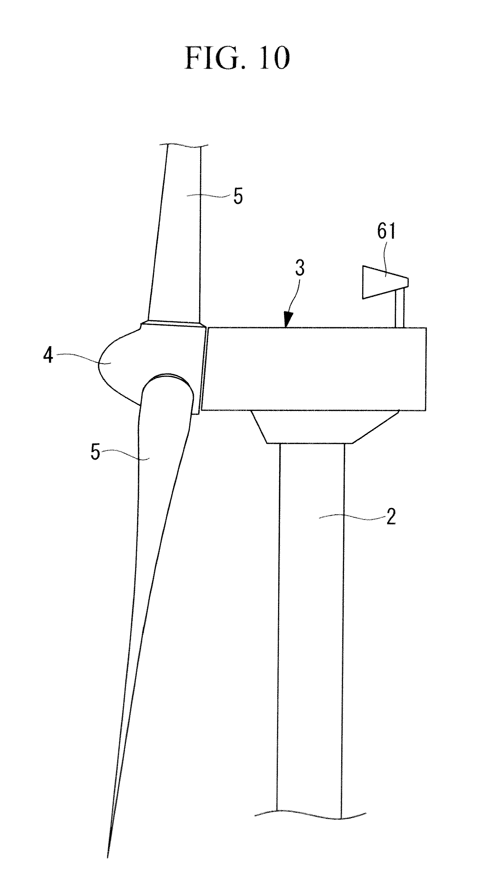

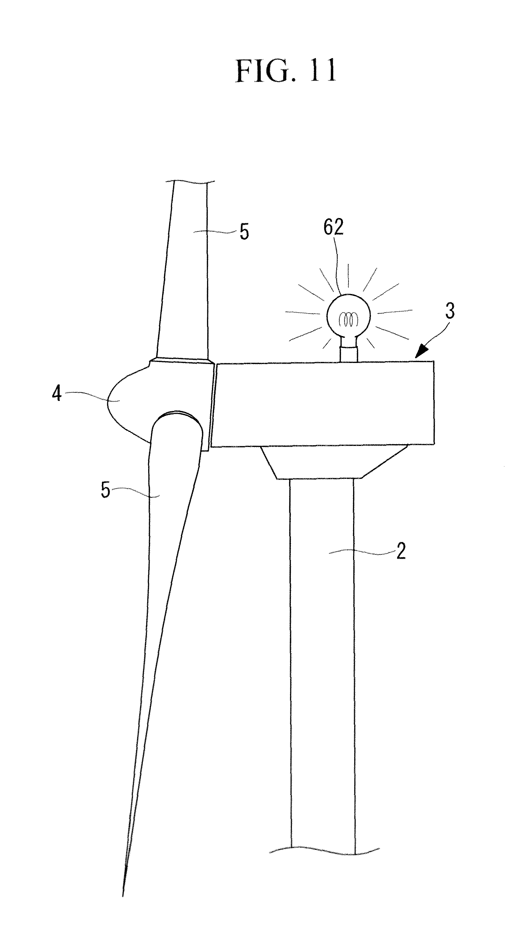

Further, alarm/warning means in FIG. 10 is an audio alarm apparatus 61 that issues a sound, like a speaker or a siren. The installation site of the audio alarm apparatus 61 is not particularly limited, and the audio alarm apparatus 61 can issue an alarm/warning to the surroundings. In particular, if a speaker is employed as the audio alarm apparatus 61, a specific verbal alarm/warning can be issued.
Further, alarm/warning means shown in FIG. 11 is a visual alarm apparatus 62, such as a warning light, for example. The installation site of the visual alarm apparatus 62 is not particularly limited, and the visual alarm apparatus 62 can issue an alarm/warning to the surroundings. In particular, if the visual alarm apparatus 62 is employed, an alarm/warning can reach farther than when sound is used.

According to the above-described off-shore wind turbine generator and off-shore wind farm of the present invention, accurate information about the situation of the wind turbine itself, surrounding weather conditions, and the like can be obtained by the monitoring apparatus 10 and can be reflected in the operational plan etc. for the power-generating facility 1.
In the off-shore wind farm, mutual monitoring between adjacent power-generating facilities 1 can be performed.

Further, since the monitoring apparatus 10 is fixedly installed off shore, the accuracy of monitoring using the radar or the like is improved, and it can be used to search for a ship in distress or the like.
The present invention is not limited to above-described embodiments, and, for example, the shape or the type of the wind turbine blades can be appropriately modified without departing from the scope thereof.

## Claims

1. An off-shore wind turbine generator that generates power by driving a generator mechanism through rotation of a rotor head to which wind turbine blades are attached, the off-shore wind turbine generator comprising monitoring means for monitoring the wind turbine generator itself and the surrounding circumstances.

2. An off-shore wind turbine generator according to claim 1, wherein the monitoring means includes at least one of a radar, a laser radar, and a camera.

3. An off-shore wind turbine generator according to claim 1 or 2, further comprising movable means for allowing the monitoring means to monitor an area of 360 degrees.

4. An off-shore wind turbine generator according to claim 2 or 3, wherein the monitoring means is installed outside a noise occurrence area where noise is produced by the rotation of the wind turbine blades.

5. An off-shore wind turbine generator according to claim 2 or 3, wherein the monitoring means is installed on a nacelle, and noise removal means for removing the noise produced by the rotation of the wind turbine blades is further provided.

6. An off-shore wind turbine generator according to any one of claims 1 to 5, further comprising alarm/warning means for the surroundings.

7. An off-shore wind farm comprising a plurality of off-shore wind turbine generators having a mixture of an off-shore wind turbine generator according to any one of claims 1 to 6 and an ordinary off-shore wind turbine generator that does not have the monitoring means,
wherein the ordinary off-shore wind turbine generator is disposed in a monitorable area of the off-shore wind turbine generator.

8. An off-shore wind farm according to claim 7, wherein the ordinary off-shore wind turbine generator is disposed at a position where a plurality of the off-shore wind turbine generators can monitor the ordinary off-shore wind turbine generator.
